# EUROPÄISCHE PATENTSCHRIFT

(11) **EP 0 844 423 B1**
(45) Veröffentlichungstag und Bekanntmachung des Hinweises auf die Patenterteilung: **12.03.2003**
(21) Anmeldenummer: 97119689.4
(22) Anmeldetag: 11.11.1997
(51) Int. Cl.: F16K 11/078

(54) **Eingriffmischventil**
Single-lever mixing valve
Mitigeur à monocommande.

(30) Priorität: 21.11.1996 DE 19648114
(43) Veröffentlichungstag der Anmeldung: 27.05.1998
(73) Patentinhaber: Friedrich Grohe AG & Co. KG, 58675 Hemer (DE)
(72) Erfinder: Humpert, Jürgen, 58675 Hemer (DE); Pawelzik, Manfred, 59494 Soest (DE)

(56) Entgegenhaltungen:
- EP-A- 0 309 443
- EP-A- 0 392 441
- EP-A- 0 662 577
- DE-A- 19 507 195
- GB-A- 2 192 256

## Beschreibung

Die Erfindung betrifft ein Eingriffmischventil mit den im Oberbegriff des Anspruchs 1 angegebenen Merkmalen.

Ein derartiges Eingriffmischventil ist aus der Druckschrift EP 0 392 441 A1 bekannt. Die Umstellung zu verschiedenen Wasserverbrauchern erfolgt hierbei durch ein Drehen des Bedienungshebels um die Mittelachse des Armaturengehäuses von ca. 180°, so daß ein häufig nicht zur Verfügung stehender Raumbedarf für die Armatur benötigt wird. Darüber hinaus bedürfte auch die Handhabung der Umstellung durch den verhältnismäßig großen Umstellwinkel von 180° problematisch sein.

Aus der Druckschrift EP 0 309 443 A1 ist ferner ein anderes Eingriffmischventil mit einer Umschaltung zu verschiedenen Verbrauchern bekannt, bei dem drei Ventilscheiben vorgesehen sind.

Bei einer Einhebelmischbatterie für den Betrieb mit einem drucklosen Überlauf-Warmwasserspeicher, wie sie aus der Druckschrift DE 195 07 195 A1 bekannt ist, wird der Ventilsitzscheibe nur Kaltwasser zugeleitet. Hierbei liegt an der Ventilsitzscheibe eine Steuerscheibe an, der eine gedichtet und formschlüssig gehaltene, eine Überströmkammer aufweisende Abdeckhaube zugeordnet ist. Mit der Steuerscheibe kann hierbei der Kaltwasserdurchfluß in zwei Teilströme aufgeteilt werden.

Der Erfindung liegt die Aufgabe zugrunde, das im Oberbegriff des Anspruchs 1 angegebene Eingriffmischventil zu verbessern und insbesondere so auszubilden, daß mit dem Betätigungsvorgang zur Einstellung der Gesamtdurchflußmenge zusätzlich wahlweise ein erster oder zweiter Verbraucher mit Kalt-, Heiß- oder Mischwasser versorgt werden kann.

Diese Aufgabe wird erfindungsgemäß mit den Merkmalen des Anspruchs 1 gelöst.
Weitere Ausgestaltungen der Erfindung sind in den Ansprüchen 2 bis 12 angegeben.

Die mit der Erfindung erzielbaren Vorteile bestehen insbesondere darin, daß die allgemein bekannte Betätigungsweise von Eingriffmischventilen im wesentlichen unverändert bleibt und die bewährte und kostengünstige Anordnung von zwei Ventilscheiben beibehalten werden kann.
In weiterer Ausgestaltung der Erfindung kann zweckmäßig an dem aus der Mischventilkartusche herausgeführten Stellhebel eine überwindbare Anschlagausbildung, wie sie beispielsweise aus der Druckschrift EP 0 662 577 A1 bekannt ist, vorgesehen werden, mit der ein ungewolltes Umschalten verhindert werden kann. Zweckmäßig wird der überwindbare Anschlag so angeordnet, daß beim Öffnungsvorgang für den Brauseanschluß zunächst durch eine erhöhte Krafteinlenkung in den Bedienungsgriff der Anschlag überwunden werden muß, so daß sichergestellt ist, daß ein unbeabsichtigtes Anstellen der Brause ausgeschlossen ist.

Ausführungsbeispiele der Erfindung sind in der Zeichnung dargestellt und werden im folgenden näher beschrieben. Es zeigt
- Fig. 1: eine Badewannenaufputz-Eingriffbatterie mit Badewannenauslauf und Brauseanschluß in Seitenansicht, teilweise geschnitten;
- Fig. 2: die in Fig. 1 gezeigte Badewannenarmatur in Draufsicht;
- Fig. 3: die in Fig. 1 gezeigte Mischventilkartusche in vergrößerter Darstellung im Längsschnitt;
- Fig. 4: die in Fig. 3 gezeigte Steuerscheibe in Draufsicht;
- Fig. 5: die in Fig. 3 gezeigte Ventilsitzscheibe in Draufsicht;
- Fig. 6: die in Fig. 3 gezeigte Paarung der Steuerscheibe mit der Ventilsitzscheibe in der Absperrstellung und Draufsicht;
- Fig. 7: die Paarung der Ventilsitzscheibe mit der Steuerscheibe gemäß Fig. 6, wobei die Steuerscheibe radial verschoben in der voll geöffneten Stellung zum Brauseanschluß dargestellt ist;
- Fig. 8: die in Fig. 7 gezeigte Scheibenpaarung, wobei die Steuerscheibe noch weiter radial verschoben und der Badewannenauslauf voll geöffnet ist;
- Fig. 9: ein anderes Ausführungsbeispiel einer Mischventilkartusche im Längsschnitt;
- Fig. 10: die in Fig. 9 gezeigte Steuerscheibe in Draufsicht;
- Fig. 11: die in Fig. 9 gezeigte Ventilsitzscheibe in Draufsicht;
- Fig. 12: die in Fig. 9 gezeigte Ventilscheibenpaarung in der Absperrstellung und Draufsicht;
- Fig. 13: die in Fig. 12 gezeigte Ventilscheibenpaarung, wobei die Steuerscheibe radial nach links verschoben und der Badewannenauslauf voll geöffnet ist;
- Fig. 14: die Ventilscheibenpaarung gemäß Fig. 12, wobei die Steuerscheibe nach rechts verschoben und der Brauseanschluß voll geöffnet ist;
- Fig. 15: ein weiteres Ausführungsbeispiel einer Mischventilkartusche im Längsschnitt;
- Fig. 16: die in Fig. 15 gezeigte Steuerscheibe in Draufsicht;
- Fig. 17: die in Fig. 15 gezeigte Ventilsitzscheibe in Draufsicht;
- Fig. 18: die in Fig. 15 gezeigte Ventilscheibenpaarung in Draufsicht und Absperrstellung;
- Fig. 19: die in Fig. 18 gezeigte Ventilscheibenpaarung, wobei die Steuerscheibe nach links radial verschoben ist, so daß der Badewannenauslauf voll geöffnet ist;
- Fig. 20: die Ventilscheibenpaarung gemäß Fig. 18, wobei die Steuerscheibe nach rechts radial verschoben ist, so daß der Brauseanschluß voll geöffnet ist;
- Fig. 21: ein weiteres Ausführungsbeispiel einer Mischventilkartusche im Längsschnitt;
- Fig. 22: die in Fig. 21 gezeigte Steuerscheibe in Draufsicht;
- Fig. 23: die in Fig. 21 gezeigte Ventilsitzscheibe in Draufsicht;
- Fig. 24: die in Fig. 21 gezeigte Ventilscheibenpaarung in Draufsicht und Absperrstellung;
- Fig. 25: die in Fig. 24 gezeigte Ventilscheibenpaarung, wobei die Steuerscheibe nach links radial verschoben ist, so daß der Badewannenauslauf voll geöffnet ist;
- Fig. 26: die Ventilscheibenpaarung gemäß Fig. 24, wobei die Steuerscheibe nach rechts radial verschoben ist, so daß der Brauseanschluß voll geöffnet ist.

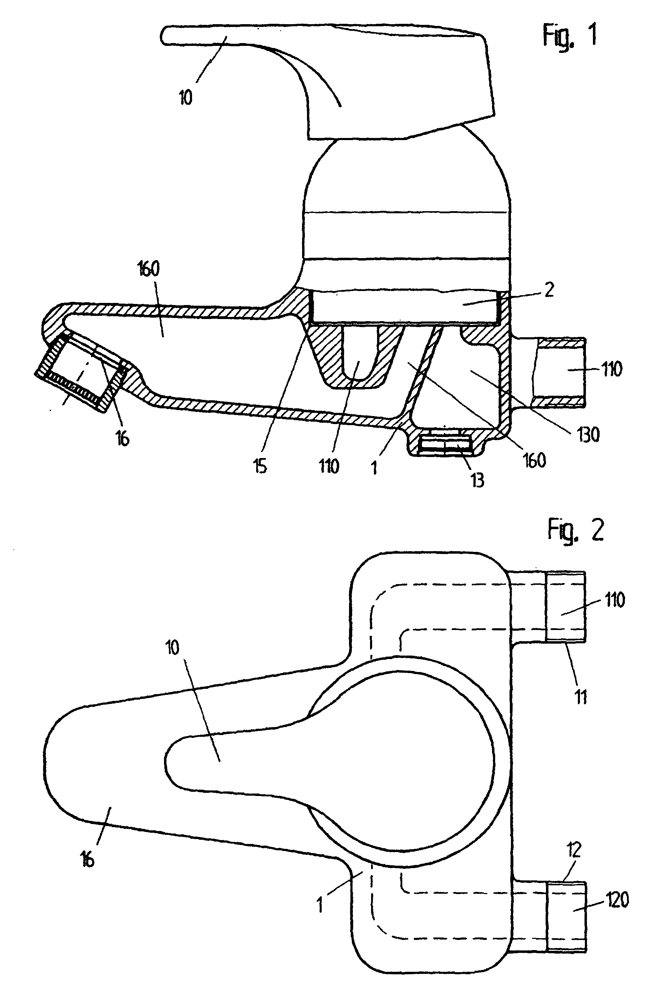

Der Einfachheit halber sind bei den Ausführungsbeispielen in der Zeichnung gleiche oder entsprechende Elemente mit jeweils gleichen Bezugszeichen versehen.
Bei der in den Figuren 1 bis 8 dargestellten Aufputz-Eingriffmischbatterie ist in einem Batteriekörper 1 eine Mischventilkartusche 2 angeordnet. Der Batteriekörper 1 ist mit Anschlüssen 11,12 für die Kalt- und Warmwasserversorgungsleitung versehen. Außerdem weist der Batteriekörper 1 einen Badewannenauslauf 16 und einen Brauseanschluß 13 auf. In einer Aufnahmebohrung 15 des Batteriekörpers 1 ist die Mischventilkartusche 2 als Baueinheit angeordnet. In einem Boden 21 der Mischventilkartusche 2 sind Wasserein- und Wasserauslaßöffnungen mit Schlauchdichtungen vorgesehen, die jeweils an einer Ventilsitzscheibe 3 und am Boden der Aufnahmebohrung 15 in der Einbaulage gedichtet anliegen, und die jeweiligen Ein- und Auslaßöffnungen umschließen. Das Kalt- und Warmwasser wird von den Anschlüssen 11 und 12 über Kanäle 110 und 120 separat an den Boden der Aufnahmebohrung 15 herangeführt. Auf einem aus der Mischventilkartusche 2 herausgeführten Stellhebel 20 ist ein hebelförmiger Griff 10 zur Betätigung des in der Mischventilkartusche 2 gekapselt angeordneten Mischventils befestigt.

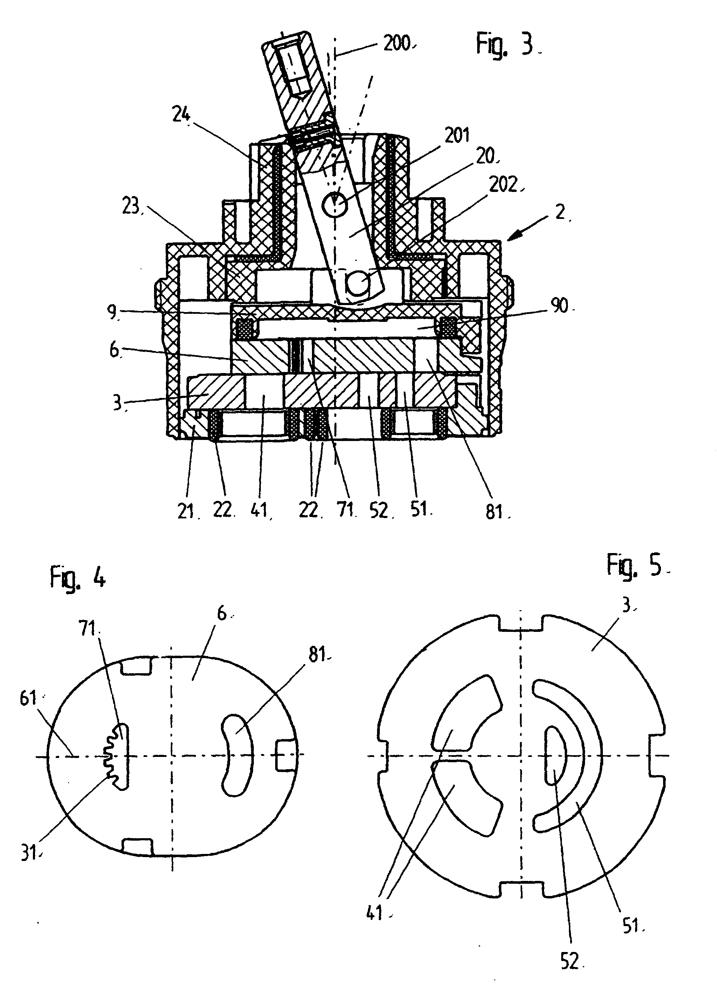

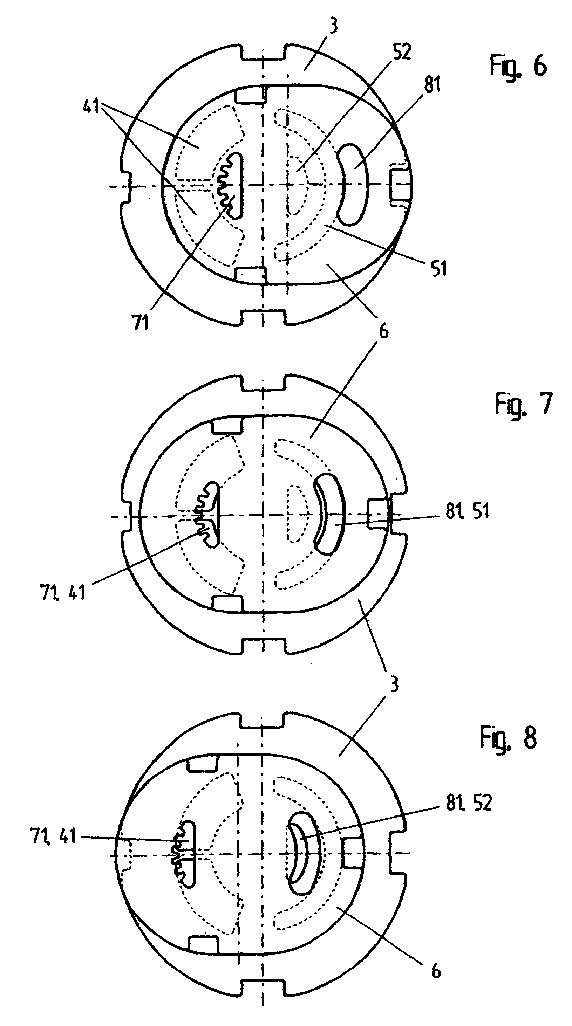

Auf dem Boden 21 in der Mischventilkartusche 2 ist eine kreisförmige Ventilsitzscheibe 3 aus Keramikwerkstoff ortsfest gehaltert. An der gegenüberliegenden Seite der Ventilsitzscheibe 3 ist eine ebenfalls aus Keramikwerkstoff hergestellte etwa ovale Steuerscheibe 6 beweglich angelagert. Die beiden Anlageflächen der Ventilsitzscheibe 3 und der Steuerscheibe 6 sind dabei feinstbearbeitet, so daß gewährleistet ist, daß einerseits eine wasserdichte Anlage gegeben ist, und andererseits eine Relativbewegung der beiden Ventilscheiben möglich ist. An der gegenüberliegenden Stirnseite der Steuerscheibe 6 ist eine Mitnehmerkappe 9 formschlüssig und gedichtet mit der Steuerscheibe 6 verbunden. Die Mitnehmerkappe 9 ist hierbei axial von einer drehbar in der Mischventilkartusche 2 angeordneten Bundbuchse 23 abgestützt. In der Bundbuchse 23 ist der Stellhebel 20 auf einer senkrecht zur Mittelachse 200 angeordneten Achse 201 schwenkbar befestigt. Der innere Endbereich des Stellhebels 20 ist an der Mitnehmerkappe 9 mit einem Stift 202 drehfest und verschwenkbar angelenkt, so daß die Steuerscheibe 6 in zwei Freiheitsgraden bewegbar ist. Die Ventilsitzscheibe 3 weist, wie es insbesondere aus Fig. 5 der Zeichnung zu entnehmen ist, in der einen Hälfte symmetrisch angeordnete, im Querschnitt als Kreisringausschnitte ausgebildete Wassereinlaßöffnungen 41 auf. In der rechten Hälfte der Ventilsitzscheibe 3 ist konzentrisch zum Mittelpunkt eine im Querschnitt etwa als Kreisringausschnitt ausgebildete Wasserauslaßöffnung 51 angeordnet, wobei der Bogenbereich etwas weniger als 180° beträgt. Axial ins Zentrum verschoben befindet sich eine weitere Wasserauslaßöffnung 52, die im Querschnitt kleiner gehalten ist und etwa als Kreisabschnitt ausgebildet ist.
Die Steuerscheibe 6 ist gedichtet mit der Mitnehmerkappe 9 verbunden, wie es insbesondere aus Fig. 3 der Zeichnung zu entnehmen ist. Die Mitnehmerkappe 9 weist eine Aushöhlung auf, die einen Überströmkanal 90 bildet. In der Steuerscheibe 6 ist eine Zuflußöffnung 71 und versetzt dazu eine Abflußöffnung 81 ausgebildet. Wie es insbesondere aus Fig. 4 ersichtlich ist, ist die Zuflußöffnung 71 im Querschnitt ebenfalls etwa kreisabschnittförmig ausgebildet, wobei die Steuerkante der Zuflußöffnung 71 zur Fließgeräuschminderung und einem weichen Öffnungs- und Schließverhalten mit einer Verzahnung 31 versehen ist. Selbstverständlich kann eine derartige Verzahnung auch alternativ oder zusätzlich in der Abflußöffnung und/oder den Wassereinlaß- und Wasserauslaßöffnungen ausgebildet sein.
Die auf einer Symmetrieachse 61 versetzt angeordnete Abflußöffnung 81 ist im Querschnitt als Kreisringelement ausgebildet.
In der in Fig. 3 und 6 gezeigten Stellung der Steuerscheibe 6 befindet sich die Mischventilkartusche 2 in der Absperrstellung, wobei die Absperrung des Wasserdurchflusses im Bereich der Wassereinlaßöffnungen 41 und der Dichtfläche der Steuerscheibe 6 erfolgt. Wird nun der Griff 10 (Figur 1) angehoben, so wird der Stellhebel 20 um die Achse 201 verschwenkt, und die Steuerscheibe 6 radial nach links verschoben. Hierbei gelangt zunächst die Abflußöffnung 81 mit der Wasserauslaßöffnung 51 in Überdeckung. Danach gelangt die Zuflußöffnung 71 mit den Wassereinlaßöffnungen 41 in Überdeckung und gibt zunehmend den Wassereintritt in den Überströmkanal frei, von wo aus es über die Abflußöffnung 81 und die Wasserauslaßöffnung 51 in einen Kanal 130 zum Brauseanschluß 13 strömen kann. Je nach dem Ausmaß der Radialverschiebung kann hierbei die Durchflußmenge pro Zeiteinheit bestimmt werden. Wird dagegen der hebelförmige Griff 10 um die Mittelachse 200 der Mischventilkartusche 2 gedreht, so werden die Einlaßquerschnitte für das zufließende Kalt- und Warmwasser gegenläufig verändert, so daß sich die Mischwassertemperatur ändert, während die Gesamtdurchflußmenge etwa konstant bleibt.
In Fig. 7 der Zeichnung befindet sich die Steuerscheibe 6 in einer mittleren Mischposition bei voll geöffnetem Brauseanschluß 13.
Wird hiernach die Steuerscheibe 16 weiter radial nach links verschoben, wie es in Fig. 8 zu entnehmen ist, so bleibt die Zuflußöffnung 71 weiterhin in Überdeckung mit den Wassereinlaßöffnungen 41, während die Abflußöffnung 81 nunmehr mit der Wasserauslaßöffnung 52 für den Badewannenauslauf 16 in Überdeckung gelangt. Die Reihenfolge von Brauseanschluß 13 und Badewannenauslauf 16 kann auch umgekehrt erfolgen, wenn eine andere Kanalausbildung im Batteriekörper 1 vorgesehen wird. Beim Verschieben der Steuerscheibe nach links wird dann zunächst der Badewannenauslauf geöffnet, bei weiterem Verschieben nach links wird dann danach der Brauseanschluß geöffnet. Bei dem radialen Verschiebevorgang sind in der Übergangsphase beide Wasserauslaßöffnungen 51 und 52 mit der Abflußöffnung 81 in Überdeckung, so daß beim Umschaltvorgang keine völlige Absperrung erfolgt. Das Mischungsverhältnis des zufließenden Kaltund Warmwassers bzw. die Temperatur des Mischwassers kann in dieser Position der Steuerscheibe 6 in gleicher Weise durch eine Links- oder Rechtsdrehung um die Mittelachse 200 eingestellt werden. Die Rückstellung und Absperrung erfolgt dementsprechend vorstehender Darstellung in umgekehrter Reihenfolge. Damit in beiden Auslaufpositionen der Steuerscheibe 6 ein gleichbleibender Zufluß gewährleistet ist, weisen die Wassereinlaßöffnungen 41 eine radiale Breite auf, die etwa doppelt so groß ist wie die maximale Höhe des Kreisbogens über der Sehne der Zuflußöffnung 71.
Um ein unbeabsichtigtes Einschalten des Brauseanschlusses zu vermeiden, ist außerdem im Bereich eines Ansatzes 24 der Mischventilkartusche 2 im Bereich des austretenden Stellhebels 20 eine Anschlageinrichtung - in der Zeichnung nicht dargestellt -, wie sie aus der europäischen Patentanmeldung EP 0 662 577 A1 bekannt ist, vorgesehen. Hierbei ist die Anschlageinrichtung von einem seitlich federnd in die Schwenkbahn des Stellhebels 20 eingreifenden Rastmittel gebildet, wobei zur Überwindung des Rastmittels eine erhöhte Stellkraft über den Griff 10 in den Stellhebel 20 einzuleiten ist.
Zweckmäßig wird die Anschlageinrichtung so angeordnet, daß der Griff 10 sich im Öffnungsbereich des Badewannenauslaufs 16 frei bewegen läßt, während beim Umstellen des Wasserausflusses auf den Brauseanschluß 13 die erhöhte Stellkraft in den Griff 10 eingeleitet werden muß.

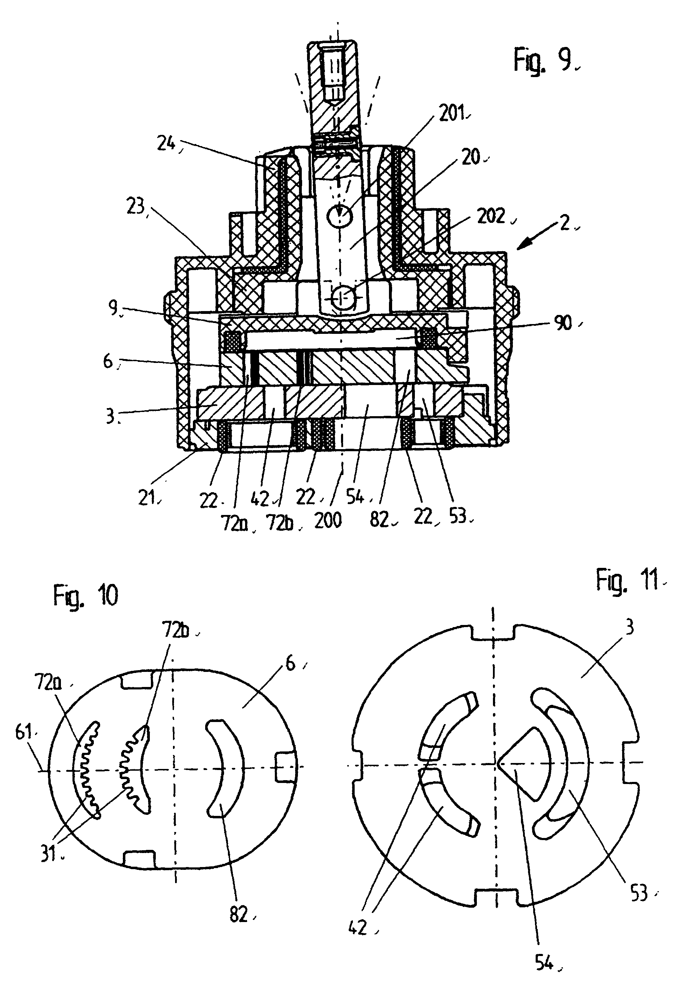

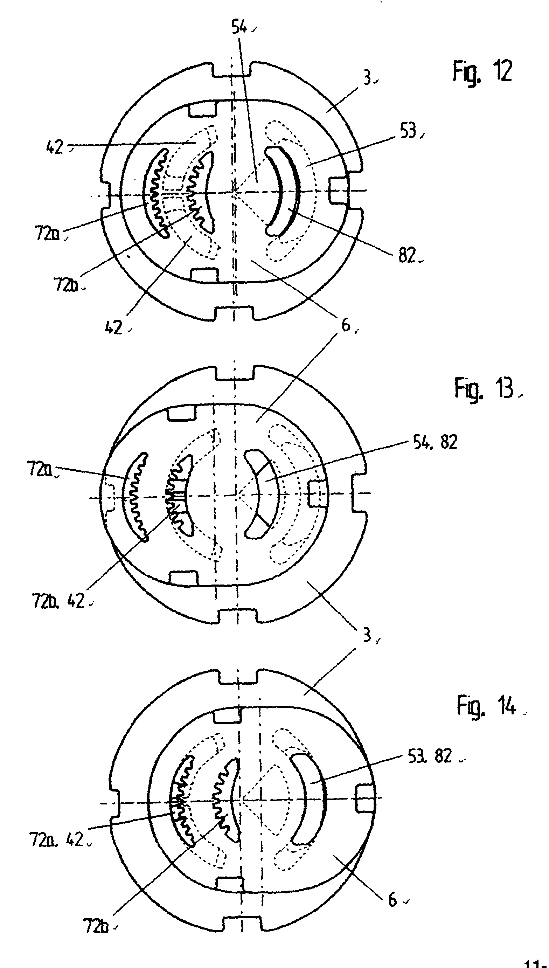

In Fig. 9 bis 14 ist ein anderes Ausführungsbeispiel einer Mischventilkartusche 2 dargestellt, die ebenfalls in einen entsprechend angepaßten Batteriekörper 1, wie er in Fig. 1 und 2 dargestellt ist, eingesetzt werden kann. Bei dieser Einrichtung sind im wesentlichen nur die Öffnungen in der Ventilsitzscheibe 3 und der Steuerscheibe 6 anders ausgebildet. Wie es insbesondere aus Fig. 11 zu entnehmen ist, befinden sich in der Ventilsitzscheibe 3 konzentrisch zum Mittelpunkt in der linken Hälfte zwei kreisringausschnittförmige Wassereinlaßöffnungen 42 für das Kalt- und Warmwasser. In der rechten Hälfte der Ventilsitzscheibe 3 ist eine im Querschnitt etwa kreisringausschnittförmig ausgebildete Wasserauslaßöffnung 53 für den Brauseanschluß 13 konzentrisch zur Ventilsitzscheibe 3 ausgebildet. Konzentrisch zur Wasserauslaßöffnung 53 ist mit Abstand eine im Querschnitt kreisausschnittförmig ausgebildete Wasserauslaßöffnung 54 für den Badewannenauslauf 16 ausgebildet.
Wie es aus Fig. 10 der Zeichnung zu entnehmen ist, weist die Steuerscheibe 6 auf einer Symmetrieachse 61 in der linken Hälfte zwei etwa konzentrisch zueinander angeordnete ringelementförmige Zuflußöffnungen 72a,72b auf. In der rechten Hälfte der Steuerscheibe 6 ist eine im Querschnitt kreisringelementförmig ausgebildete Abflußöffnung 82 ausgebildet. Wie es insbesondere aus Fig. 9 und Fig. 12 zu entnehmen ist, befinden sich die beiden Zuflußöffnungen 72a,72b in der Absperrstellung zu beiden Seiten der Wassereinlaßöffnungen 42. Die als Steuerkanten wirkenden Seiten der Zuflußöffnungen 72a,72b sind ebenfalls mit Verzahnungen 31 versehen.

Wird nun mit dem Griff 10 über den Stellhebel 20 die Mitnehmerkappe 9 mit der Steuerscheibe 6 radial nach links verschoben, wie es aus Fig. 13 zu entnehmen ist, so gelangt zunehmend die Zuflußöffnung 72b mit den Wassereinlaßöffnungen 42 in Überdeckung, so daß das zufließende Kalt- und Warmwasser in den Überströmkanal 90 eintreten und sich hier vermischen kann und als Mischwasser durch die Abflußöffnung 82 und die Wasserauslaßöffnung 54, die mit dem Badewannenauslauf 16 über den Kanal 160 verbunden ist, austritt.
Wird dagegen die Steuerscheibe 6 aus der in Fig. 12 gezeigten Absperrposition radial nach rechts, wie es in Fig. 14 der Zeichnung dargestellt ist, verschoben, so gelangt die Zuflußöffnung 72a zunehmend mit den Wassereinlaßöffnungen 42 in Überdeckung. Hiernach wird das zufließende Kalt- und Warmwasser wiederum in dem Überströmkanal 90 vermischt und gelangt durch die Abflußöffnung 82 in die Wasserauslaßöffnung 53, die mit dem Brauseanschluß 13 über den Kanal 130 verbunden ist. Bei dieser Ausbildung kann somit aus der Absperrstellung wahlweise der Brauseanschluß 13 oder der Badewannenauslauf 16 mit Mischwasser versorgt werden. Hierbei kann ebenfalls eine Anschlagausbildung vorgesehen werden, mit der ein unbeabsichtigtes Einschalten des Brauseanschlusses vermieden wird.

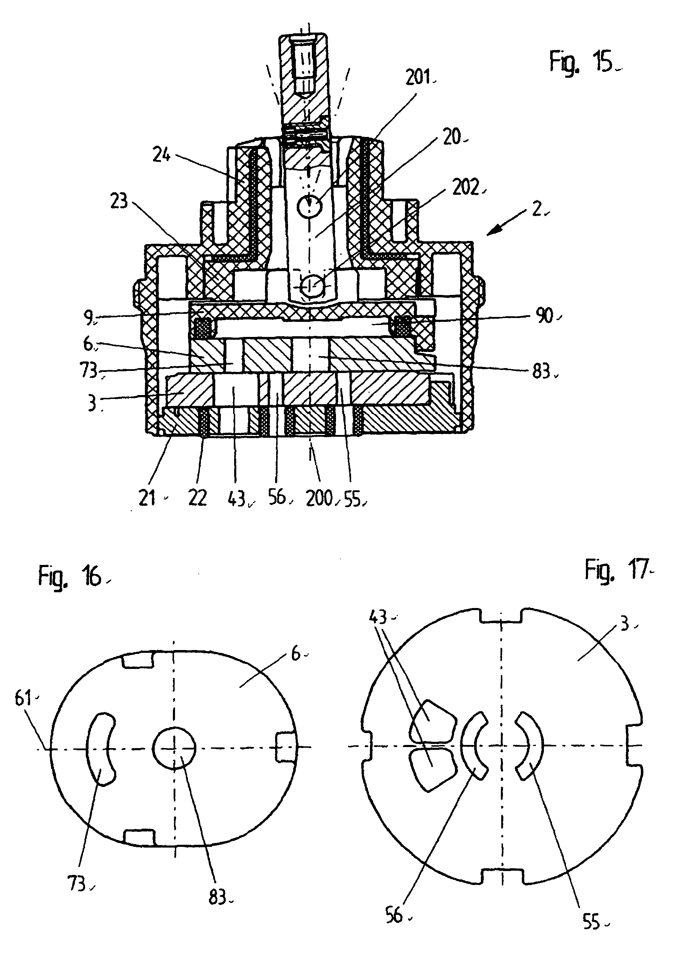

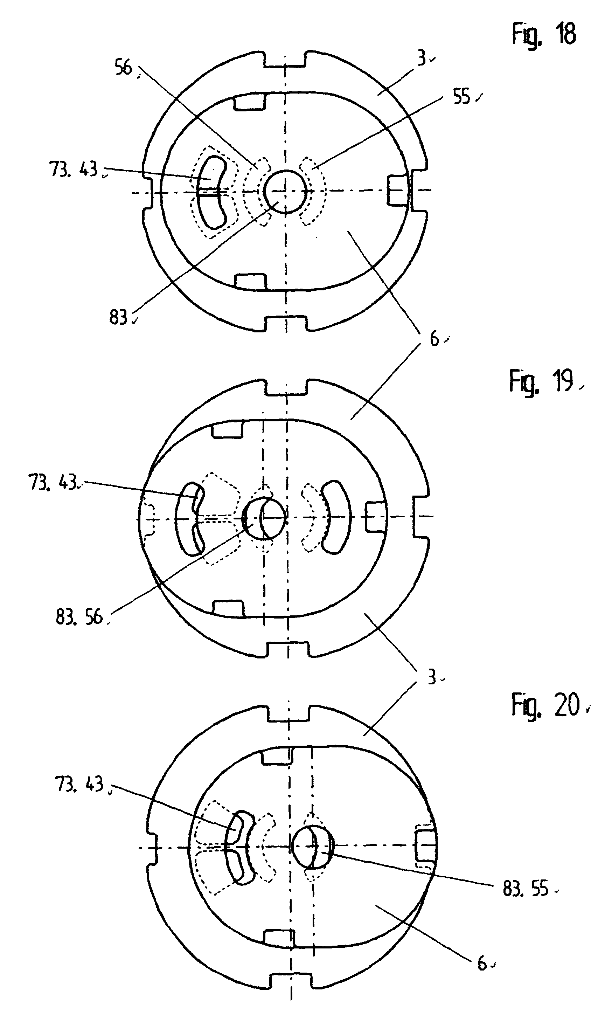

In den Fig. 15 bis 20 ist ein weiteres Ausführungsbeispiel einer Mischventilkartusche gezeigt. Bei dieser Ausbildung sind in der kreisförmigen Ventilsitzscheibe 3, wie es insbesondere aus Fig. 17 zu entnehmen ist, konzentrisch zwei gegenüberliegende kreisringausschnittförmige Wasserauslaßöffnungen 55,56 ausgebildet, wobei die Wasserauslaßöffnung 56 in der linken Hälfte und die Wasserauslaßöffnung 55 in der rechten Hälfte der Ventilsitzscheibe 3 angeordnet ist. Konzentrisch zu den beiden Wasserauslaßöffnungen 55,56 sind in der linken Hälfte mit größerem Radius symmetrisch zum Durchmesser kreisausschnittförmig ausgebildete Wassereinlaßöffnungen 43 vorgesehen.
In der Steuerscheibe 6 ist, wie es insbesondere aus Fig. 16 zu entnehmen ist, im Zentrum eine im Querschnitt kreisförmige Abflußöffnung 83 ausgebildet, während auf der Symmetrieachse 61 in der linken Bildhälfte konzentrisch eine ringelementförmig ausgebildete Zuflußöffnung 73 vorgesehen ist. Wie es insbesondere aus Fig. 15 und 18 zu entnehmen ist, befindet sich bei dieser Mischventilkartusche 2 der anstehende Wasserdruck aus dem Versorgungsleitungsnetz in jeder Ventilstellung im Überströmkanal 90. Die Absperr- und Dosierfunktion erfolgt hierbei von den Wasserauslaßöffnungen 55,56 mit der Abflußöffnung 83, wobei die Absperrung des Wasserdurchflusses an der Abflußöffnung 83 von der Dichtfläche der Ventilsitzscheibe 3 erfolgt.
Wird nun mit dem Griff 10 über den Stellhebel 20 die Mitnehmerkappe 9 mit der Steuerscheibe 6 aus der Absperrstellung radial nach links, wie es in Fig. 19 gezeigt ist, bewegt, so gelangt zunehmend die Abflußöffnung 83 mit der Wasserauslaßöffnung 56 in Überdeckung.
Wird dagegen die Steuerscheibe 6 aus der in Fig. 18 gezeigten Absperrposition radial nach rechts bewegt, so gelangt zunehmend die Abflußöffnung 83 mit der Wasserauslaßöffnung 55 in Überdeckung.

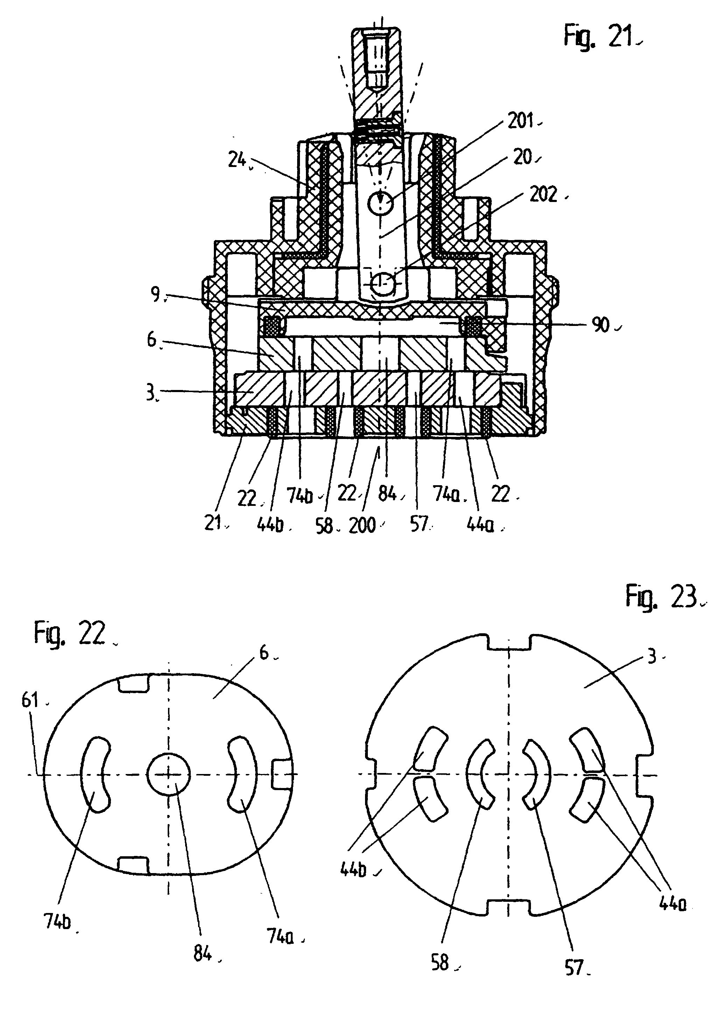

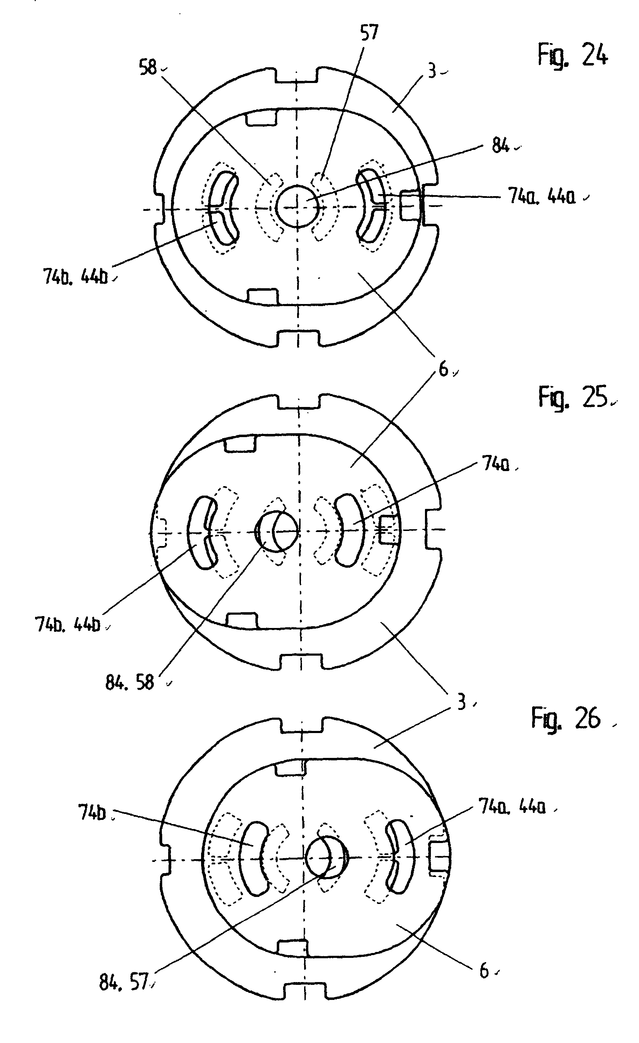

Ein zu dem vorstehend beschriebenen Ausführungsbeispiel abgewandelte Version ist in den Fig. 21 bis 26 gezeigt. Wie es insbesondere aus Fig. 23 ersichtlich ist, sind symmetrisch in der rechten und linken Hälfte der Ventilsitzscheibe 3 jeweils im Querschnitt als Kreisringausschnitte ausgebildete Wassereinlaßöffnungen 44a,44b vorgesehen. Die radiale Breite der Wassereinlaßöffnungen 44a,44b ist hierbei etwa halb so groß wie die in der Fig. 17 gezeigten Wassereinlaßöffnungen 43. Auch die Zuflußöffnungen 74a,74b sind symmetrisch in der rechten und linken Hälfte auf der Symmetrieachse 61 der Steuerscheibe 6, wie es aus Fig. 22 zu entnehmen ist, angeordnet. In der Schließstellung der Steuerscheibe 6, wie es aus Fig. 21 und 24 zu entnehmen ist, befinden sich die Wassereinlaßöffnungen 44a mit der Zuflußöffnung 74a und die Wassereinlaßöffnungen 44b mit der Zuflußöffnung 74b in Überdeckung.
Die Abflußöffnung 84 ist hierbei so dimensioniert, daß die Wasserauslaßöffnungen 57,58 sie mit einem für die Abdichtung erforderlichen Abstand umgreifen.
Durch eine radiale Verschiebung der Steuerscheibe 6 nach links, wie es aus Fig. 25 zu entnehmen ist, gelangt somit zunehmend die Wasserauslaßöffnung 58 mit der Abflußöffnung 84 in Überdeckung.
Wird dagegen die Steuerscheibe von der Absperrstellung, wie in Fig. 24 gezeigt, radial nach rechts verschoben, wie es aus Fig. 26 zu entnehmen ist, so gelangt zunehmend die Wasserauslaßöffnung 57 mit der Abflußöffnung 84 in Überdeckung.

## Patentansprüche

1. Eingriffmischventil mit zwei relativ zueinander bewegbaren Ventilscheiben (3,6), die jeweils mit einer Dichtfläche aneinander liegen, wobei
- die eine Ventilscheibe als ortsfeste VentilsitzScheibe (3) vorgesehen ist, in der wenigstens eine Kaltwasser- und eine Warmwassereinlaßöffnung (41,42,43,44a,44b) sowie wenigstens zwei Wasserauslaßöffnungen (51,52,53,54,55,56) ausgebildet sind,
- die andere Ventilscheibe als bewegliche Steuerscheibe (6) mit wenigstens einem Überströmkanal (90) vorgesehen ist, so dass, bezogen zur Ventilsitzscheibe (3) in Abhängigkeit von der Drehstellung der Steuerscheibe (6) das Verhältnis der im Überströmkanal erfolgenden Mischung des zufließenden Kalt- und Warmwassers bestimmbar und in Abhängigkeit der Radialstellung der Steuerscheibe (6) die Gesamtdurchflußmenge einstellbar ist, und dass Mittel vorgesehen sind, mit denen ein wahlweises Umschalten zwischen den wenigstens zwei Auslaßöffnungen (51,52,53,54,55,56) in der Ventilsitzscheibe (3) ermöglicht ist, **dadurch gekennzeichnet, daß**
- der Überströmkanal (90) im Bereich einer dichtund formschlüssig mit der Steuerscheibe (6) verbundenen Mitnehmerkappe (9) ausgebildet ist,
- der Überströmkanal (90) mit wenigstens einer Zuflußöffnung (71,72a,72b,73,74a,74b) und einer Abflußöffnung (81,82,83,84) durch die Steuerscheibe (6) hindurchgeführt ist,
- die wenigstens eine Abflußöffnung (81,82,83,84) der Steuerscheibe (6) in Abhängigkeit von ihrer Radialstellung mit wenigstens einer der beiden Wasserauslaßöffnungen (51,52,53, 54,55,56,57,58) der Ventilsitzscheibe (3) verbindbar ist, während die wenigstens eine Zuflußöffnung (71,72a,72b,73,74a,74b) mit einer oder beiden Wassereinlaßöffnungen (41,42,43,44a,44b) verbunden oder verbindbar ist.

2. Eingriffmischventil nach Anspruch 1, **dadurch gekennzeichnet, daß** die Absperrung des Wasserdurchflusses im Bereich der Wassereinlaßöffnungen (41,42) mit der Dichtfläche der Steuerscheibe (6) erfolgt.

3. Eingriffmischventil nach Anspruch 1, **dadurch gekennzeichnet, daß** die Absperrung des Wasserdurchflusses an der Abflußöffnung (83,84) von einer Dichtfläche der Ventilsitzscheibe (3) erfolgt.

4. Eingriffmischventil nach einem der Ansprüche 1 bis 3, **dadurch gekennzeichnet, daß** an den Steuerkanten der Steuerscheibe (6) und/oder der Ventilsitzscheibe (3) eine Verzahnung (31) ausgebildet ist, mit der eine Drosselung und Absperrung des Wasserdurchflusses erfolgt.

5. Eingriffmischventil nach wenigstens einem der Ansprüche 1 bis 4, **dadurch gekennzeichnet, daß** an der Mitnehmerkappe (9) ein Stellhebel (20) zur Betätigung der Steuerscheibe (6) in zwei Freiheitsgraden vorgesehen ist, der in der Absperrstellung oder vor der Öffnung des Abflusses in den Brauseanschluß (13) an einer Anschlageinrichtung anliegt.

6. Eingriffmischventil nach Anspruch 5, **dadurch gekennzeichnet, daß** die Anschlageinrichtung von einem seitlich federnd in die Schwenkbahn des Stellhebels (20) eingreifenden Rastmittel gebildet ist, wobei zur Überwindung des Rastmittels eine erhöhte Stellkraft in den Stellhebel (20) einzuleiten ist und vorzugsweise hiernach die Wasserauslaßöffnung (51,53,55,57) für einen Brauseanschluß (13) freigegeben wird.

7. Eingriffmischventil nach wenigstens einem der Ansprüche 1 bis 6, **dadurch gekennzeichnet, daß** die Abflußöffnung (83,84) in der Absperrstellung eine Position zwischen den beiden Wasserauslaßöffnungen (55,56,57,58) einnimmt.

8. Eingriffmischventil nach wenigstens einem der Ansprüche 1 bis 7, **dadurch gekennzeichnet, daß** die Wassereinlaßöffnung (41,42,43,44a,44b) und die Wasserauslaßöffnungen (51,52,53,54,55,56,57,58) im Querschnitt als Kreisringausschnitt, Kreisausschnitt oder Kreisabschnitt ausgebildet sind.

9. Eingriffmischventil nach wenigstens einem der Ansprüche 1 bis 8, **dadurch gekennzeichnet, daß**
-- die Zuflußöffnung (71) im Querschnitt als Kreisabschnitt ausgebildet ist und mit im Querschnitt als Kreisringausschnitte ausgebildeten Wassereinlaßöffnungen (41) in Verbindung bringbar ist, wobei die radiale Breite der Wassereinlaßöffnungen (41) doppelt so groß ist wie die maximale Höhe des Kreisbogens über der Sehne der Zuflußöffnung (71);
-- die Abflußöffnung (81) im Querschnitt als Kreisringelement ausgebildet und so angeordnet ist, daß sie in der Absperrstellung am Außenrand der im Querschnitt als Kreisringausschnitt ausgebildeten Wasserauslaßöffnung (51) für den Brauseanschluß (13) angrenzt;
-- die Wasserauslaßöffnung (52) für den Badewannenauslaß (16) konzentrisch zur Wasserauslaßöffnung (51) angeordnet und im Querschnitt kreisabschnittförmig ausgebildet ist, so daß bei einer radialen Verschiebung der Steuerscheibe (6) von der Absperrstellung zunächst die erste Wasserauslaßöffnung (51) und danach die zweite Wasserauslaßöffnung (52) mit den Wassereinlaßöffnungen (41) in Verbindung bringbar ist.

10. Eingriffmischventil nach wenigstens einem der Ansprüche 1 bis 8, **dadurch gekennzeichnet, daß**
-- zwei etwa konzentrisch zueinander ringelementförmige Zuflußöffnungen (72a,72b) vorgesehen sind, die in der Absperrstellung zu beiden Seiten der kreisringausschnittförmigen Wassereinlaßöffnungen (42) angeordnet sind, so daß bei einer Radialbewegung eine der beiden Zuflußöffnungen (72a,72b) in Überdeckung mit den Wassereinlaßöffnungen (42) gelangt;
-- die Wasserauslaßöffnungen (53) für den Brauseanschluß (13) im Querschnitt kreisringelementförmig und die Wasserauslaßöffnung (54) für den Badewannenauslaß (16) konzentrisch, im Querschnitt kreisausschnittförmig ausgebildet ist, wobei die Abflußöffnung (82) im Querschnitt kreisringelementförmig ausgebildet ist und in der Absperrstellung zwischen dem Außenumfang der zweiten Wasserauslaßöffnung (54) und dem Innenumfang der ersten Wasserauslaßöffnung (53) positioniert ist, so daß bei einer Radialverschiebung der Steuerscheibe (6) die Wassereinlaßöffnungen (42) über die erste oder zweite Zuflußöffnung (72a,72b) durch die Abflußöffnung (82) mit einer der beiden Auslaßöffnungen (53,54) in Verbindung bringbar ist.

11. Eingriffmischventil nach wenigstens einem der Ansprüche 1 bis 8, **dadurch gekennzeichnet, daß**
-- die Wassereinlaßöffnungen (43) im Querschnitt kreisringausschnittförmig ausgebildet sind, und in jeder Radialstellung der Steuerscheibe (6) mit einer im Querschnitt kreisringelementförmig gestalteten Zuflußöffnung (73) in Überdeckung ist;
-- die Abflußöffnung (83) im Querschnitt kreisförmig gestaltet und etwa im Zentrum der Steuerscheibe (6) angeordnet ist, wobei die beiden Wasserauslaßöffnungen (55,56) als konzentrisch gegenüberliegende Kreisausschnitte ausgebildet sind, derart, daß in der Absperrstellung die Wasserauslaßöffnungen (55,56) die Abflußöffnung (83) mit einem für die Abdichtung erforderlichen Abstand umgreifen, so daß bei einer Radialverschiebung der Steuerscheibe (6) die eine oder die andere Wasserauslaßöffnung (55,56) zunehmend mit den Wassereinlaßöffnungen (43) verbunden wird.

12. Eingriffmischventil nach Anspruch 11, **dadurch gekennzeichnet, daß** die Wassereinlaßöffnungen (44a, 44b) paarweise gegenüberliegend in der Ventilsitzscheibe (3) angeordnet sind und die Zuflußöffnungen (74a,74b) entsprechend in der Steuerscheibe (6) ausgebildet sind, so daß der Wassereintritt in den Überströmkanal (9) von den einerseits angeordneten Wassereinlaßöffnungen (44a) und der Zuflußöffnung (74a) und/oder den andererseits angeordneten Wassereinlaßöffnungen (44b) und der Zuflußöffnung (74b) erfolgen kann.

## Claims

1. Single-handle mixer valve having two valve discs (3, 6), movable relative to each other, each of which has a sealing face lying against the sealing face of the other, wherein
- one valve disc is provided with a fixed-position valve seat disc (3) in which there are arranged at least one cold water and one hot water inlet aperture (41, 42, 43, 44a, 44b) and at least two water outlet apertures (51, 52, 53, 54, 55, 56),
- the other valve disc, in the form of a movable control disc (6), is provided with at least one transfer channel (90),
so that, with regard to the valve seat disc (3), the ratio in which the inflowing cold and hot water are mixed in the transfer channel is determinable as a function of the rotational position of the control disc (6), and the total throughflow amount is adjustable as a function of the radial position of the control disc (6), and so that means are provided by which switching at will between the at least two outlet apertures (51, 52, 53, 54, 55, 56) in the valve seat disc (3) is rendered possible, **characterised in that**
- the transfer channel (90) is provided in the region of a driver cap (9) that is positively joined and sealed to the control disc (6),
- the transfer channel (90) having at least one inflow aperture (71, 72a, 72b, 73, 74a, 74b) and one discharge aperture (81, 82, 83, 84) is passed through the control disc (6),
- the at least one discharge aperture (81, 82, 83, 84) of the control disc (6) can be placed in communication, as a function of its radial position, with at least one of the two water outlet apertures (51, 52, 53, 54, 55, 56, 57, 58) of the valve seat disc (3), while the at least one inflow aperture (71, 72a, 72b, 73, 74a, 74b) is or can be placed in communication with one or both water inlet apertures (41, 42, 43, 44a, 44b).

2. Single-handle mixer valve according to claim 1, **characterised in that** shutting off the water flow in the region of the water inlet apertures (41, 42) is effected by the sealing face of the control disc (6).

3. Single-handle mixer valve according to claim 1, **characterised in that** shutting off the water flow at the discharge aperture (83, 84) is effected by a sealing face of the valve seat disc (3).

4. Single-handle mixer valve according to any one of claims 1 to 3, **characterised in that** teeth (31) are provided at the control edges of the control disc (6) and/or of the valve seat disc (3), by means of which the water flow is throttled and shut off.

5. Single-handle mixer valve according to at least one of claims 1 to 4, **characterised in that** there is provided on the driver cap (9) an adjusting lever (20) for operating the control disc (6) in two degrees of freedom, which lever, in the shut-off position or prior to opening the discharge into the shower connection (13), abuts a stop device.

6. Single-handle mixer valve according to claim 5, **characterised in that** the stop device is formed by a locking means that is in lateral spring-biased engagement in the pivotal path of the adjusting lever (20), increased adjusting force having to be initiated in the adjusting lever (20) in order to overcome the locking means and preferably thereafter the water outlet aperture (51, 53, 55, 57) for a shower connection (13) is opened.

7. Single-handle mixer valve according to at least one of claims 1 to 6, **characterised in that** the discharge aperture (83, 84) in the shut-off position assumes a position between the two water outlet apertures (55, 56, 57, 58).

8. Single-handle mixer valve according to at least one of claims 1 to 7, **characterised in that** the water inlet aperture (41, 42, 43, 44a, 44b,) and the water outlet apertures (51, 52, 53, 54, 55, 56, 57, 58) are in cross-section in the form of a sector of an annulus, a sector of a circle or a segment of a circle.

9. Single-handle mixer valve according to at least one of claims 1 to 8, **characterised in that**
-- the inflow aperture (71) is in cross-section in the form of a segment of a circle, and can be brought into communication with water inlet apertures (41) having a cross-section in the form of a sector of an annulus, wherein the radial width of the water inlet apertures (41) is twice as large as the maximum height of the arc over the chord of the inflow aperture (71);
-- the discharge aperture (81) is in cross-section in the form of an element of an annulus and is so arranged that, in the shut-off position, it borders the outer edge of the water outlet aperture (51), having a cross-section in the form of a sector of an annulus, for the shower connection (13);
-- the water outlet aperture (52) for the bathtub outlet (16) is arranged concentrically relative to the water outlet aperture (51) and is in cross-section in the form of a segment of a circle so that, on radial displacement of the control disc (6) from the shut-off position, first of all the first water outlet aperture (51) and then the second water outlet aperture (52) can be brought into communication with the water inlet apertures (41).

10. Single-handle mixer valve according to at least one of claims 1 to 8, **characterised in that**
-- two inflow apertures (72a, 72b) each in the form of an element of an annulus and arranged approximately concentrically relative to each other are provided, which apertures, in the shut-off position, are located at both sides of the water inlet apertures (42) in the form of sectors of an annulus, so that, on radial displacement, one of the two inflow apertures (72a, 72b) comes to lie over the water inlet apertures (42);
-- the water outlet apertures (53) for the shower connection (13) are in cross-section in the form of an element of an annulus, and the water outlet aperture (54) for the bathtub outlet (16) arranged concentrically is in cross-section in the form of a sector of a circle, wherein the discharge aperture (82) is in cross-section in the form of an element of an annulus and, in the shut-off position, is located between the outer periphery of the second water outlet aperture (54) and the inner periphery of the first water outlet aperture (53) so that, on radial displacement of the control disc (6), the water inlet apertures (42) can be brought into communication via the first or second inflow aperture (72a, 72b), through the discharge aperture (82), with one of the two outlet apertures (53, 54).

11. Single-handle mixer valve according to at least one of claims 1 to 8, **characterised in that**
-- the water inlet apertures (43) are in cross-section in the form of a sector of an annulus and, in any radial position of the control disc (6), is in an overlying position relative to an inflow aperture (73) having a cross-section in the form of an element of an annulus;
-- the discharge aperture (83) is circular in cross-section and is arranged approximately in the centre of the control disc (6), the two water outlet apertures (55, 56) being formed as concentrically opposing sectors of a circle such that, in the shut-off position, the water outlet apertures (55, 56) engage around the discharge aperture (83) at the necessary distance to provide a seal so that, on radial displacement of the control disc (6), one or the other water outlet aperture (55, 56) increasingly comes into communication with the water inlet apertures (43).

12. Single-handle mixer valve according to claim 11, **characterised in that** the water inlet apertures (44a, 44b) are arranged in the valve seat disc (3) opposite one another in pairs and the inflow apertures (74a, 74b) are formed correspondingly in the control disc (6) so that water can enter into the transfer channel (9) from the water inlet apertures (44a) arranged on one side and the inflow aperture (74a) and/or from the water inlet apertures (44b) arranged on the other side and the inflow aperture (74b).

## Revendications

1. Robinet mitigeur, comportant deux disques de soupape (3, 6) mobiles l'un par rapport à l'autre en étant appliqués l'un sur l'autre par une portée d'étanchéité dans lequel :
- un des disques de soupape est prévu comme disque de siège fixe (3) dans lequel sont percées au moins une ouverture d'entrée d'eau froide et une ouverture d'entrée d'eau chaude (41, 42, 43, 44a, 44b) ainsi qu'au moins deux ouvertures de sortie d'eau (51, 52, 53, 54, 55, 56),
- l'autre disque de soupape est prévu comme disque de commande (6) pourvu d'au moins un canal de pontage (90) de sorte que par rapport au disque de siège de soupape (3) en fonction de la position de rotation du disque de commande (6) on règle le rapport dans le mélange qui se forme dans le canal de pontage entre l'eau froide et l'eau chaude qui s'écoulent, et qu'en fonction de la position radiale du disque de commande (6) on règle le débit total traversant, des moyens étant prévus pour permettre une commutation au choix entre au moins deux ouvertures (51, 52, 53, 54, 55, 56) du disque de siège de soupape (3),
**caractérisé en ce que**
- le canal de pontage (90) est réalisé dans la zone d'un capot entraîneur (9) relié de manière étanche et par combinaison de formes avec le disque de commande (6),
- le canal de pontage (90), par au moins une ouverture d'amenée (71, 72a, 72b, 73, 74a, 74b) et une ouverture d'écoulement (81, 82, 83, 84) traverse le disque de commande (6), et
- les ouvertures d'écoulement (81, 82, 83, 84), au nombre d'une au moins, traversant le disque de commande (6) peuvent, en fonction de leurs positions radiales être reliées à au moins une des deux ouvertures de sortie d'eau (51, 52, 53, 54, 55, 56, 57, 58) du disque de siège de soupape (3) tandis que les ouvertures d'amenée (71, 72a, 72b, 73, 74a, 74b) au nombre d'une au moins sont reliées ou peuvent être reliées à une ou deux ouvertures d'entrée d'eau (41, 42, 43, 44a, 44b).

2. Robinet mitigeur selon la revendication 1,
**caractérisé en ce que**
l'arrêt du passage de l'eau est assuré dans la zone des ouvertures d'entrée d'eau (41, 42) par la portée d'étanchéité du disque de commande (6).

3. Robinet mitigeur selon la revendication 1,
**caractérisé en ce que**
l'arrêt de passage de l'eau est assuré sur l'ouverture d'écoulement (83, 84) par une portée d'étanchéité du disque de siège de soupape (3).

4. Robinet mitigeur selon l'une quelconque des revendications 1 à 3,
**caractérisé en ce que**
les bords de commande du disque de commande (6) et/ou du disque de siège de soupape (3) présentent une denture (31) permettant d'arrêter ou d'étrangler le passage de l'eau.

5. Robinet mitigeur selon au moins l'une quelconque des revendications 1 à 4,
**caractérisé en ce qu'**
il est prévu, sur le capot d'entraînement (9) pour actionner le disque de commande (6) avec deux degrés de liberté, un levier de manoeuvre (20) qui en position d'arrêt ou avant l'ouverture de l'écoulement dans le raccord de douche (13) est appliqué sur un dispositif de butée.

6. Robinet mitigeur selon la revendication 5,
**caractérisé en ce que**
le dispositif de butée est constitué par un moyen d'arrêt engagé sous l'action latérale d'un ressort sur la piste de basculement du levier de manoeuvre (20) et, pour surmonter la résistance de ce moyen d'arrêt, il faut exercer sur le levier (20) une force de manoeuvre plus élevée qui de préférence ici a pour effet de libérer l'ouverture de sortie d'eau (51, 53, 55, 57) conduisant au raccord de douche (13).

7. Robinet mitigeur selon au moins l'une des revendications 1 à 6,
**caractérisé en ce qu'**
en position d'arrêt, l'ouverture d'écoulement (83, 84) occupe une position entre les deux ouvertures de sortie d'eau.

8. Robinet mitigeur selon l'une quelconque des revendications 1 à 7,
**caractérisé en ce que**
l'ouverture d'entrée d'eau (41, 42, 43, 44a, 44b) et les ouvertures de sortie (51, 52, 53, 54, 55, 56, 57, 58) ont des sections en forme de parties d'anneau circulaire, de secteurs circulaires ou de segments de cercle.

9. Robinet mitigeur selon l'une quelconque des revendications 1 à 8,
**caractérisé en ce que**
- l'ouverture d'amenée (71) a une section en forme de segment de cercle et peut être amenée en liaison avec des ouvertures d'entrée d'eau (41) à section en forme de parties d'anneau circulaire, la largeur des ouvertures d'entrée d'eau (41) étant le double de la hauteur maximale de l'air de cercle au dessus de la corde de l'ouverture d'amenée (71),
- l'ouverture d'écoulement (81) a une section en forme d'élément d'anneau circulaire et est disposée de manière qu'en position d'arrêt, elle soit en limite du bord externe de l'ouverture de sortie d'eau (51), à section en forme de secteur circulaire conduisant au raccord de douche (13),
- l'ouverture de sortie d'eau (52) conduisant à l'alimentation (16) de la baignoire est concentrique à la sortie d'eau (51), et a une section en forme de segment de cercle, de sorte qu'un écoulement radial du disque de commande (6) partant de la position d'arrêt, permet d'amener en liaison avec les ouvertures d'entrée d'eau (41) d'abord la première ouverture de sortie d'eau (51), puis la seconde (52).

10. Robinet mitigeur selon l'une quelconque des revendications 1 à 8,
**caractérisé en ce qu'**
- il est prévu deux ouvertures d'amenée (72a, 72b) en forme de segments annulaires sensiblement concentriques, qui en position d'arrêt sont disposées des deux côtés des ouvertures d'entrée d'eau (42) en forme de secteurs circulaires, de sorte qu'un déplacement radial amène une des deux ouvertures d'amenée (72a, 72b) en recouvrement avec les ouvertures d'entrée d'eau (42),
- l'ouverture de sortie d'eau (53) destinée au raccord de douche (13) a une section en forme d'élément annulaire et l'ouverture de sortie d'eau (54) pour l'alimentation de la baignoire (16) lui est concentrique, avec une section en forme de secteur circulaire, l'ouverture d'écoulement (82) ayant une section en forme d'élément annulaire circulaire qui, en position d'arrêt, est positionné entre la périphérie externe de la seconde ouverture de sortie d'eau (54) et la périphérie interne de la première ouverture de sortie d'eau (53), de sorte qu'un déplacement radial du disque de commande (6), par l'intermédiaire de la première ou de la seconde ouverture d'amenée (72a, 72b) permet à travers l'ouverture d'écoulement (82), d'amener les ouvertures d'entrée d'eau (42) en liaison avec les deux ouvertures d'écoulement (53, 54).

11. Robinet mitigeur selon l'une quelconque des revendications 1 à 8,
**caractérisé en ce que**
- l'ouverture d'entrée d'eau (43) a en section la forme d'un secteur circulaire et, pour toute position radiale du disque de commande (6) est en recouvrement avec une ouverture d'amenée (73) dont la section a la forme d'un élément annulaire circulaire,
- l'ouverture d'écoulement (83) a une section circulaire et est placée au centre du disque de commande (6), les deux ouvertures de sortie d'eau (55, 56) étant constituées par des secteurs circulaires concentriques se faisant face, de sorte que dans la position d'arrêt, les ouvertures de sortie d'eau (55, 56) entourent l'ouverture d'écoulement (83) à une certaine distance nécessaire à l'étanchéité et qu'un coulissement radial du disque de commande (6) met en liaison croissante l'ouverture d'entrée d'eau (43) avec l'une ou l'autre des ouvertures de sortie d'eau (55, 56).

12. Robinet mitigeur selon la revendication 11,
**caractérisé en ce que**
les ouvertures d'entrée d'eau (44a, 44b) sont disposées en paire face à face dans le disque de siège de soupape (3) et les ouvertures d'amenée (74a, 74b) sont réalisées en correspondance dans le disque de commande (6), de sorte que l'entrée de l'eau dans le canal de pontage (9) peut s'effectuer depuis les ouvertures d'entrée d'eau (44a) situées d'un côté et l'ouverture d'amenée (74a) et/ou depuis les ouvertures d'entrée d'eau (44b) situées de l'autre côté et l'ouverture d'amenée (74b).
